# EUROPÄISCHE PATENTSCHRIFT

(11) **EP 1 322 855 B1**
(45) Veröffentlichungstag und Bekanntmachung des Hinweises auf die Patenterteilung: **28.11.2007**
(21) Anmeldenummer: 01969792.9
(22) Anmeldetag: 28.09.2001
(51) Int. Cl.: F02M 35/02, F02M 35/024

(54) **GEHÄUSE ZUR AUFNAHME EINES LUFTFILTERELEMENTS**
HOUSING FOR RECEIVING AN AIR FILTER ELEMENT
BOITIER POUR LE LOGEMENT D'UN ELEMENT DE FILTRE A AIR

(30) Priorität: 05.10.2000 DE 10049313
(43) Veröffentlichungstag der Anmeldung: 02.07.2003
(73) Patentinhaber: AUDI AG, 85045 Ingolstadt (DE)
(72) Erfinder: MARCHART, Udo, 70378 Stuttgart (DE); ZIEGLER, Ralf, 71634 Ludwigsburg (DE); ERLEWEIN, Peter, 74172 Neckarsulm (DE); BANSCHER, Wolfgang, 74211 Leingarten (DE)
(86) Internationale Anmeldenummer: PCT/EP2001/011237
(87) Internationale Veröffentlichungsnummer: WO 2002/031339

(56) Entgegenhaltungen:
- EP-A- 0 348 905
- US-A- 2 480 379
- US-A- 4 419 112
- US-A- 4 605 426
- US-A- 4 802 902
- US-A- 5 893 937

## Beschreibung

Die vorliegende Erfindung betrifft ein Gehäuse zur Aufnahme eines Luftfilterelements gemäß Patentanspruch 1.

Aus der Druckschrift DE 689 02 370 T2 ist ein Satz von Teilelementen zur Bildung einer Serie von Luftfiltergehäusen zum Filtern der einer Brennkraftmaschine eines Arbeitsfahrzeugs zugeführten Luft bekannt. Dieser Satz umfasst im Wesentlichen zwei Basiselemente und drei verschiedene Serien von Teilelementen mit geringfügig unterschiedlichen Abmessungen, die selektiv an den beiden Basiselementen befestigt werden können.

Des weiteren ist aus der Druckschrift US 2,480,379 ein Luftfiltergehäuse bekannt, das so ausgestaltet ist, dass es mittels austauschbarer Einlasselemente und Auslasselemente an verschiedene Typen von Brennkraftmaschinen angeschlossen werden kann.

Weitere Luftfiltergehäuse sind aus der US-A-4605426 oder US-A-5893937 bekannt.

Indem bei diesem Stand der Technik jeweils bestimmte Elemente ausgetauscht werden, ist es somit möglich, verschiedene Luftfiltergehäuse zu bilden, die zur Verwendung in Fahrzeugen mit unterschiedlichen Dimensionen und unterschiedlichen Maschinen geeignet sind. Dadurch können die Kosten bei der Herstellung und Lagerhaltung der Luftfiltergehäuse deutlich reduziert werden.

Ausgehend von diesem Stand der Technik ist es Aufgabe der vorliegenden Erfindung, ein verbessertes Gehäuse zur Aufnahme eines Luftfilterelements zu schaffen. Dabei sollen insbesondere die austauschbaren Teilelemente des Luftfiltergehäuses, welche verschiedene Abmessungen aufweisen, besonders einfach ausgebildet sein.

Gelöst wird die Aufgabe durch ein Gehäuse mit den Merkmalen des Patentanspruchs 1. Indem das Luftfilterelement innerhalb des Gehäuses zwischen einem ersten Trägerelement, das am Gehäuseboden angeordnet ist, und einem zweiten Trägerelement, das am Gehäusedeckel angeordnet ist, positionierbar ist, wobei mittels des ersten Trägerelements und/oder des zweiten Trägerelements eine Abdichtung bzw. eine Trennung zwischen dem Rohluftraum und dem Reinluftraum verwirklicht ist, können verschiedene Luftfilterelemente mit unterschiedlichen Abmessungen in einem einheitlichen, aus einem Gehäuseboden und einem Gehäusedeckel gebildeten Gehäuse gehalten werden. Die beiden Trägerelemente sind dabei flach und relativ klein ausgebildet, so dass die Herstellung und die Lagerhaltung des erfindungsgemäßen Luftfiltergehäuses gegenüber dem Stand der Technik weitaus einfacher und daher auch weitaus kostengünstiger ist.

Vorteilhaft ist das erste Trägerelement als eine im Wesentlichen kreisförmige Scheibe mit jeweils einer Dichtungslippe an der Oberseite und an der Unterseite ausgebildet. Durch die beiden Dichtungslippen wird zum einem die Positionierung des ersten Trägerelements am Gehäuseboden erleichtert und zum anderen die Abdichtung zwischen dem Rohluftraum und dem Reinluftraum erreicht. Das kreisförmige erste Trägerelement ist dabei aufgrund seiner Formgebung besonders stabil, so dass das in dem Gehäuse aufzunehmende Luftfilterelement darin klemmend gehalten werden kann.

Ebenfalls vorteilhaft ist das zweite Trägerelement als eine im Wesentlichen ringförmige Scheibe mit jeweils einer Dichtungslippe an der Oberseite und an der Unterseite ausgebildet. Dadurch wird wie beim ersten Trägerelement die Positionierung erleichtert und die Abdichtung erreicht. Durch das ringförmige zweite Trägerelement ist außerdem zwischen dem Inneren des rohrförmigen Luftfilterelements und dem Innern des kuppelartigen Gehäusedeckels eine Verbindungsöffnung geschaffen.

Alternativ zu den Dichtungslippen könnten die beiden Trägerelemente jedoch auch mit dem Gehäuseboden und/oder dem Gehäusedeckel verschweißt oder verklebt sein, um eine Abdichtung zu erreichen.

Ist an das zweite Trägerelement ein Luftleitelement angeformt, so kann die vom Luftfilterelement durch die Verbindungsöffnung in den Gehäusedeckel einströmende gefilterte Luft in gewünschter Weise geleitet werden, so dass der Strömungswiderstand innerhalb des Gehäuses reduziert wird.

Trägt das zweite Trägerelement im Bereich seiner Verbindungsöffnung einen Luftmassenmesser, so ist der Luftmassenmesser dort optimal positioniert. Außerdem können auf diese Weise auch verschieden groß dimensionierte Luftmassenmesser an dem zweiten Trägerelement einfach innerhalb des Luftfiltergehäuses positioniert werden.

Bei Bedarf können das erste und das zweite Trägerelement jedoch auch umgekehrt ausgebildet sein, das heißt dass das erste Trägerelement als ringförmige Scheibe ausgebildet ist und dass das zweite Trägerelement als kreisförmige Scheibe ausgebildet ist.

Bevorzugt ist das von dem Gehäuse aufzunehmende Luftfilterelement rohrförmig ausgebildet, damit hierfür im Handel befindliche genormte Luftfilterelemente verwendet werden können. Bei diesen Luftfilterelementen ist die Rohluftseite an der Außenseite und die Reinluftseite an der Innenseite ihres zylindrischen Mantels angeordnet.

Zweckmäßig weist der Gehäuseboden eine seitliche Einlassöffnung für die ungefilterte Luft und der Gehäusedeckel eine seitliche Auslassöffnung für die gefilterte Luft auf. Zur Erhöhung der Flexibilität und zur Gewichtsersparnis weist der Gehäuseboden zudem eine zentrale Öffnung auf, die mittels des kreisförmigen ersten Trägerelements abgedeckt bzw. verschlossen werden kann oder dann, wenn das am Gehäuseboden angeordnete erste Trägerelement ringförmig ausgebildet ist, als Ein- oder Auslassöffnung für die gefilterte Luft dienen kann. Ist das im Gehäusedeckel angeordnete zweite Trägerelement kreisförmig ausgebildet, so kann der Durchgang zu der seitlichen Einlass- bzw. Auslassöffnung im Gehäusedeckel zudem abgedeckt bzw. verschlossen werden.

Zur Erleichterung der Positionierung von unterschiedlich hoch bauenden Luftfilterelementen innerhalb des Gehäuses weist der Gehäusedeckel eine wandseitig umlaufende Auflageschulter auf. An dieser Auflageschulter kann das zweite Trägerelement mit seiner Dichtungslippe aufliegen, wobei zwischen dem Rohluftraum und dem Reinluftraum eine Abdichtung erreicht wird, welche durch die oberhalb der Auflageschulter seitlich im Gehäusedeckel angeordnete Auslassöffnung nicht beeinträchtigt wird.

Die vorliegende Erfindung wird unter Bezugnahme auf die nachfolgenden Zeichnungsfiguren näher erläutert. Es zeigen:
- Figur 1: ein Gehäuse zur Aufnahme eines Luftfilterelements mit zwei Trägerelementen gemäß einer ersten Ausführungsform;
- Figur 2: das Gehäuse gemäß einer zweiten Ausführungsform; und
- Figur 3: das Gehäuse gemäß einer dritten Ausführungsform.

Das Gehäuse zur Aufnahme eines rohrförmigen Luftfilterelements 1 umfasst einen wannenartigen Gehäuseboden 2 und einen damit korrespondierenden kuppelartigen Gehäusedeckel 3.

Die ungefilterte Luft gelangt durch eine seitliche Einlassöffnung 4 im Gehäuseboden 2 in den Rohluftraum 5 innerhalb des Gehäuses. Von dort tritt die ungefilterte Luft an der außenliegenden Rohluftseite des Luftfilterelements 1 ein und an der innenliegenden Reinluftseite des Luftfilterelements 1 als gefilterte Luft aus. Daraufhin wird die im Reinluftraum 6 innerhalb des Gehäuses befindliche Luft durch eine seitliche Auslassöffnung 7 im Gehäusedeckel 3 dem Saugrohr einer nicht gezeigten Brennkraftmaschine zugeführt.

Zur Positionierung des Luftfilterelements 1 in dem Gehäuseboden 2 bzw. in dem Gehäusedeckel 3 und zur Abdichtung des Rohluftraumes 5 gegenüber dem Reinluftraum 6 sind zwei Trägerelemente 8, 9 vorgesehen.

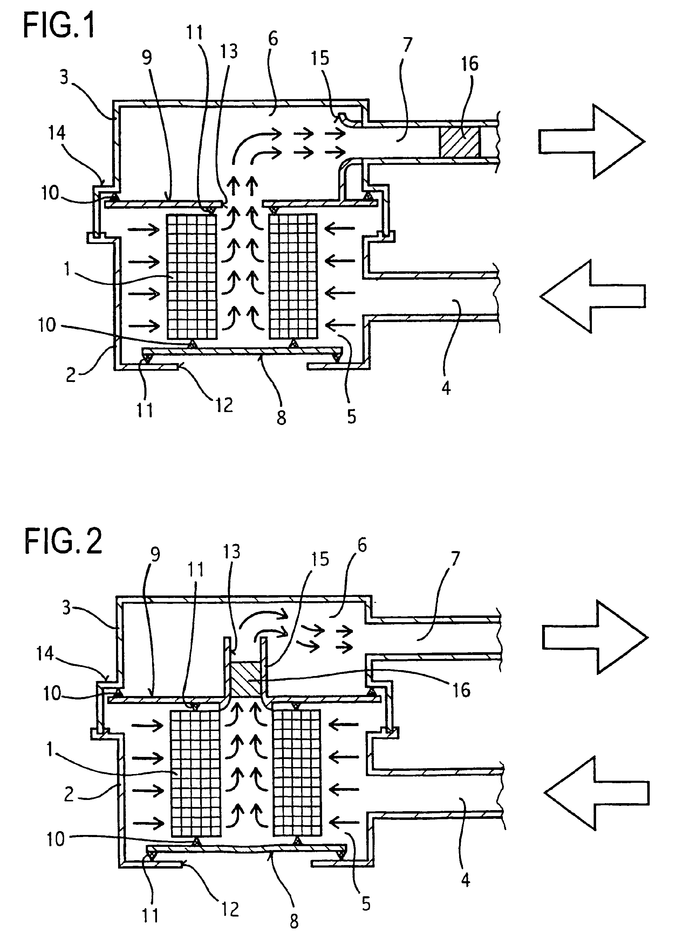

Gemäß den Figuren 1 und 2 ist das am Gehäuseboden 2 angeordnete erste Trägerelement 8 als eine im Wesentlichen kreisförmige ebene Scheibe mit jeweils einer Dichtungslippe 10, 11 an der Oberseite und an der Unterseite ausgebildet. Durch dieses erste Trägerelement 8 wird eine zentrale Öffnung 12 des Gehäusebodens 2 abgedeckt bzw. verschlossen Die beiden Dichtungslippen 10, 11 liegen dabei an der unteren Stirnseite des Luftfilterelements 1 bzw. am Gehäuseboden 2 an. Und das am Gehäusedeckel 3 angeordnete zweite Trägerelement 9 ist als eine im Wesentlichen ringförmige ebene Scheibe mit jeweils einer Dichtungslippe 10, 11 an der Ober- und Unterseite sowie einer mittigen Verbindungsöffnung 13 ausgebildet. Das zweite Trägerelement 9 liegt an einer wandseitig umlaufenden Auflageschulter 14 des Gehäusedeckels 3 auf.

Die beiden Dichtungslippen 10, 11 liegen dabei an der Auflageschulter 14 des Gehäusedeckels 3 bzw. an der oberen Stirnseite des Luftfilterelements 1 an und die Verbindungsöffnung 13 ermöglicht den Durchtritt der vom Luftfilterelement 1 gefilterten Luft in den Gehäusedeckel 3.

In der ersten und bei der zweiten Ausführungsform aus den Figuren 1 und 2 erstreckt sich der Rohluftraum 5 im Wesentlichen innerhalb des Gehäusebodens 2 und erstreckt sich der Reinluftraum 6 im Wesentlichen innerhalb des Gehäusedeckels 3, wobei die Trennung dieser beiden Räume 5, 6 durch das Luftfilterelement 1 sowie durch das ringförmige zweite Trägerelement 9 realisiert ist.

In der Figur 1 ist seitlich am zweiten Trägerelement 9 zudem ein trichterartiges Luftleitelement 15 angeformt. Dieses Luftleitelement 15 erleichtert den Austritt der gefilterten Luft aus dem Reinluftraum innerhalb des Gehäusedeckels 3 durch die Auslassöffnung 7 des Gehäusedeckels 3 zu dem Saugrohr der Brennkraftmaschine.

Und in der Figur 2 ist am zweiten Trägerelement 9 dagegen ein röhrenartiges Luftleitelement 15 angeformt. Dieses Luftleitelement 15 schließt sich an die Verbindungsöffnung 13 des als ringförmige Scheibe ausgebildeten zweiten Trägerelements 9 an und trägt in seinem Innern einen Luftmassenmesser 16.

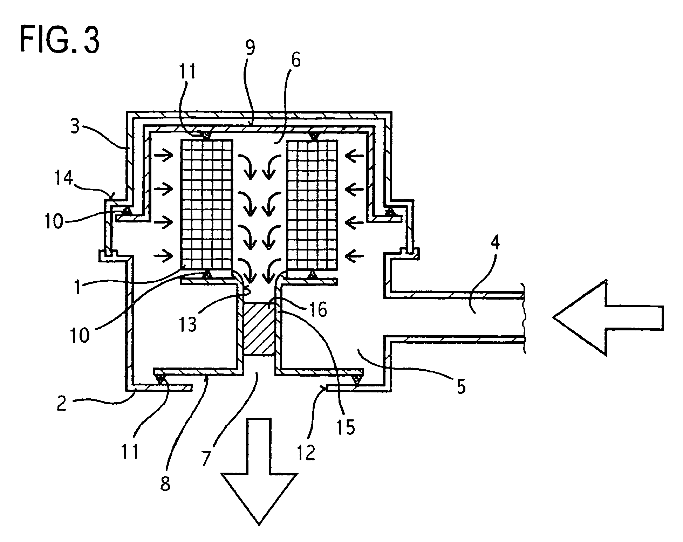

In der dritten Ausführungsform gemäß der Figur 3 erstreckt sich der Rohluftraum 5 sowohl innerhalb des Gehäusebodens 2 wie auch innerhalb des Gehäusedeckels 3, während sich der Reinluftraum 6 im Wesentlichen innerhalb des rohrförmigen Luftfilterelements 1 und innerhalb des am Gehäuseboden 2 angeordneten ersten Trägerelements 8 erstreckt. Demnach wird die gefilterte Luft bei dieser dritten Ausführungsform nicht durch die Auslassöffnung 7 im Gehäusedeckel 3, sondern durch die zentrale Öffnung 12 im Gehäuseboden 2 dem Saugrohr der Brennkraftmaschine zugeführt.

Das am Gehäuseboden 2 angeordnete erste Trägerelement 8 ist dabei als eine Art Abstandshalter mit zwei parallelen ringförmigen Scheiben und einem dazwischen angeordneten röhrenartigen Luftleitelement 15 ausgebildet, wobei die beiden Dichtungslippen 10, 11 an der unteren Stirnseite des Luftfilterelements 1 bzw. an dem Gehäuseboden 2 anliegen. Innerhalb des röhrenartigen Luftleitelements 15 ist wiederum ein Luftmassenmesser 16 vorgesehen. Das am Gehäusedeckel 3 angeordnete zweite Trägerelement 9 ist bei dieser dritten Ausführungsform dagegen topfförmig ausgebildet, wobei die beiden Dichtungslippen 10, 11 an der Auflageschulter 14 des Gehäusedeckels 3 bzw. an der oberen Stirnseite des Luftfilterelements 1 anliegen, so dass hierdurch die seitliche Auslassöffnung 7 des Gehäusedeckels 3 verschlossen ist.

## Patentansprüche

1. Gehäuse mit einem Gehäuseboden und einem Gehäusedeckel zur Aufnahme eines Luftfilterelements, wobei
das Luftfilterelement (1) innerhalb des Gehäuses zwischen einem ersten Trägerelement (8), das am Gehäuseboden (2) angeordnet ist, und einem zweiten Trägerelement (9), das am Gehäusedeckel (3) angeordnet ist, positionierbar ist, wobei mittels des ersten Trägerelements (8) und/oder des zweiten Trägerelements (9) eine Abdichtung zwischen dem Rohluftraum (5) und dem Reinluftraum (6) verwirklicht ist, wobei
das erste Trägerelement (8) als eine im Wesentlichen kreisförmige Scheibe ausgebildet ist und zwischen dem Gehäuseboden (2) und dem ersten Trägerelement (8) eine Dichtungslippe (10) vorgesehen ist und,
das zweite Trägerelement (9) als eine im Wesentlichen ringförmige Scheibe ausgebildet ist und zwischen dem Gehäusedeckel (3) und dem zweiten Trägerelement (9) eine Dichtungslippe (10) vorgesehen ist.

2. Gehäuse nach Anspruch 1, **dadurch gekennzeichnet, dass** das erste Trägerelement (8) mit jeweils einer Dichtungslippe (10, 11) an der Oberseite und an der Unterseite ausgebildet ist.

3. Gehäuse nach einem der Ansprüche 1 oder 2, **dadurch gekennzeichnet, dass** das zweite Trägerelement (9) mit jeweils einer Dichtungslippe (10, 11) an der Oberseite und an der Unterseite ausgebildet ist.

4. Gehäuse nach einem der Ansprüche 1 bis 3, **dadurch gekennzeichnet, dass** an dem zweiten Trägerelement (9) ein Luftleitelement (15) angeformt ist.

5. Gehäuse nach einem der Ansprüche 1 bis 4, **dadurch gekennzeichnet, dass** das zweite Trägerelement (9) im Bereich seiner Verbindungsöffnung (13) einen Luftmassenmesser (16) trägt.

6. Gehäuse nach einem der Ansprüche 1 bis 5, **dadurch gekennzeichnet, dass** das Luftfilterelement (1) rohrförmig ausgebildet ist.

7. Gehäuse nach einem der Ansprüche 1 bis 6, **dadurch gekennzeichnet, dass** der Gehäuseboden (2) eine seitliche Einlassöffnung (4) für die ungefilterte Luft und der Gehäusedeckel (3) eine seitliche Auslassöffnung (7) für die gefilterte Luft aufweist.

8. Gehäuse nach Anspruch 7, **dadurch gekennzeichnet, dass** der Gehäuseboden (2) eine zentrale Öffnung (12) aufweist.

9. Gehäuse nach einem der Ansprüche 1 bis 8, **dadurch gekennzeichnet, dass** der Gehäusedeckel (3) eine wandseitig umlaufende Auflageschulter (14) aufweist.

## Claims

1. Housing having a housing bottom and a housing top for receiving an air filter element, wherein the air filter element (1) can be positioned interiorly of the housing between a first carrier element (8) which is arranged at the housing bottom (2) and a second carrier element (9) which is arranged at the housing top (3), and wherein a seal is effected between the raw air chamber (5) and the clean air chamber (6) by means of the first carrier element (8) and/or the second carrier element (9), and wherein the first carrier element (8) is made as an essentially circular disc and a sealing lip (10) is provided between the housing bottom (2) and the first carrier element (8), and the second carrier element (9) is made as an essentially ring shaped disc and a sealing lip (10) is provided between the housing top (3) and the second carrier element (9).

2. Housing according to claim 1, **characterised in that** the first carrier element (8) is made with sealing lips (10, 11) at its upper surface and at its lower surface respectively.

3. Housing according to one of claims 1 and 2, **characterised in that** the second carrier element (9) is made with sealing lips (10, 11) at its upper surface and at its lower surface respectively.

4. Housing according to one of claims 1 to 3, **characterised in that** an air guide element (15) is formed onto the second carrier element (9).

5. Housing according to one of claims 1 to 4, **characterised in that** the second carrier element (9) carries a mass airflow meter (16) in the region of its connecting opening (13).

6. Housing according to one of claims 1 to 5, **characterised in that** the air filter element (1) is made tubular.

7. Housing according to one of claims 1 to 6, **characterised in that** the housing bottom (2) has a lateral inlet opening (4) for the unfiltered air and the housing top (3) has a lateral outlet opening (7) for the filtered air.

8. Housing according to claim 7, **characterised in that** the housing bottom (2) has a central opening (12).

9. Housing according to one of claims 1 to 8, **characterised in that** the housing top (3) has a circumferentially extending abutment shoulder (14) at the side of its wall.

## Revendications

1. Boîtier doté d'un fond de boîtier et d'un couvercle de boîtier destiné à recevoir un élément de filtre à air,
l'élément de filtre à air (1) pouvant être positionné à l'intérieur du boîtier entre un premier élément de support (8), qui est disposé sur le fond de boîtier (2), et un second élément de support (9), qui est disposé sur le couvercle de boîtier (3), une étanchéification entre la chambre d'air brut (5) et la chambre d'air pur (6) étant réalisée au moyen du premier élément de support (8) et/ou du second élément de support (9), le premier élément de support (8) étant conçu comme un disque sensiblement circulaire et une lèvre d'étanchéité (10) étant prévue entre le fond de boîtier (2) et le premier élément de support (8), et le second élément de support (9) étant conçu comme un disque sensiblement annulaire et une lèvre d'étanchéité (10) étant prévue entre le couvercle de boîtier (3) et le second élément de support (9).

2. Boîtier selon la revendication 1, **caractérisé en ce que** le premier élément de support (8) est conçu avec respectivement une lèvre d'étanchéité (10, 11) sur le côté supérieur et sur le côté inférieur.

3. Boîtier selon l'une quelconque des revendications 1 ou 2, **caractérisé en ce que** le second élément de support (9) est conçu avec respectivement une lèvre d'étanchéité (10, 11) sur le côté supérieur et sur le côté inférieur.

4. Boîtier selon l'une quelconque des revendications 1 à 3, **caractérisé en ce qu'**un élément conducteur d'air (15) est formé sur le second élément de support (9).

5. Boîtier selon l'une quelconque des revendications 1 à 4, **caractérisé en ce que** le second élément de support (9) supporte dans la zone de son ouverture de liaison (13) un dispositif de mesure de masse d'air (16).

6. Boîtier selon l'une quelconque des revendications 1 à 5, **caractérisé en ce que** l'élément de filtre à air (1) est conçu de façon tubulaire.

7. Boîtier selon l'une quelconque des revendications 1 à 6, **caractérisé en ce que** le fond de boîtier (2) comprend une ouverture d'entrée latérale (4) pour l'air non filtré et le couvercle de boîtier (3) comprend une ouverture de sortie latérale (7) pour l'air filtré.

8. Boîtier selon la revendication 7, **caractérisé en ce que** le fond de boîtier (2) comprend une ouverture centrale (12).

9. Boîtier selon l'une quelconque des revendications 1 à 8, **caractérisé en ce que** le couvercle de boîtier (3) comprend un épaulement d'appui circulaire (14) côté paroi.
